# EUROPEAN PATENT APPLICATION

(11) **EP 3 037 018 A1**
(43) Date of publication of application: **29.06.2016**
(21) Application number: 15201499.9
(22) Date of filing: 21.12.2015
(51) Int. Cl.: A47C 5/10, A47C 7/02

(54) **CHAIR, SET OF CHAIR PARTS AND METHOD FOR INTERCONNECTING A CHAIR SEAT TO A CHAIR FRAME**

(30) Priority: 22.12.2014 SE 1451630
(71) Applicant: Kinnarps AB, 521 88 Kinnarp (SE)
(72) Inventor: DAVIDSSON, Dennis, 566 32 Habo (SE); BONDÉUS, Martin, 331 55 Värnamo (SE)
(74) Representative: Bergenstråhle Group AB

(57) **Abstract**

Disclosed is a chair (1) comprising a chair seat (2) comprising a plurality of chair frame receiving units (10). The chair further comprises a chair frame (3) comprising a number of longitudinal elements. Each of the receiving units (10) has a receiving means (12) in which a respective one of the longitudinal elements of the chair frame (3) is received. Further, each of the plurality of chair frame receiving units (10) further has snap locking means. The chair (1) further comprises a plurality of snap-in lids (20) being in locking engagement with respective of the plurality of receiving units (10) thereby locking the chair frame (3) between the plurality of receiving units (10) and the plurality of snap-in lids (20). Further is disclosed a set of chair parts for assembling a chair, the set of chair parts comprising a chair seat (2) having a plurality of chair frame receiving units (10), a first type and a second type of chair frame (3) of mutually different cross-sectional sizes and a first type (20a) and a second type (20b) of snap-in lids (20) of mutually different sizes, the first type of snap-in lid being adapted for the first type of chair frame and the second type of snap-in lid being adapted for the second type of chair frame.

## Description

### Technical field

The present disclosure relates generally to a chair having a chair seat and a chair frame, a set of chair parts to be assembled into a chair and a method for assembling a chair comprising a chair seat and a chair frame.

### Background

It is well-known to produce seats and frames for any kind of chairs, such as chairs with or without backs, stools etc. separately and thereafter to assemble the separately made seat and frame. The seat and frame are then normally coupled or interconnected by fastening means riveting, bolting or screwing using rivets, bolts or screws passing through holes in the seat and the frame. Such a production and assembly method requires a rather large assembly effort and possibly assembly equipment such as riveting machines, screw driving machines etc. For this reason, prior art chairs may be pre-assembled during the production process so that they are ready to use when they arrive at a place where they are to be used. However, pre-assembled chairs are rather bulky and therefore take up lots of storage and transport space.

Prior art chair US3393941 present a chair where a chair seat and a chair frame can be assembled without using fastening means such as screws. The seat of this chair has assembly means of plastics 2c, 2d, 2e formed during molding of the seat. The assembly means are shaped according to the shape of the frame to be inserted into the assembly means. The assembly means 2e is a resilient clamping member. Due to the elasticity of the plastic material, the clamping member is pressed by force onto the frame member and thus provides a clamping action on this member. Such an assembly means does however not ensure stable and safe coupling, especially not over time. Further, such an assembly means is only applicable to a certain frame size. If a different frame size is used, a different chair seat has to be made.

Prior art patents EP1284113 and EP2555656 present other chairs where a chair seat and a chair frame can be assembled without using fastening means such as screws. Here the frame is provided with coupling means for sliding engagement with complimentary shaped coupling means arranged on an underside of the seat, wherein the sliding engagement takes place substantially parallel to the plane of the seat surface. For being able to interconnect the frame to the seat, a rather long straight frame part bearing against the seat surface is needed, since more than the length of the coupling means of the frame added with the length of the complimentary coupling means would be needed for being able to slide the coupling means onto each other.

Consequently, there is a need for a different solution for assembling chair seat to chair frame without needing screws or similar for the interconnection, which solution can be used also for frames having a short frame length adapted to bear against the seat surface, resulting in more degrees of freedom when designing frames. Also, the assembly solution needs to ensure safe and stable coupling between seat and frame. Further, there is a need for a cost-efficient solution for producing chairs with mutually different sizes of the chair frames.

### Summary

It is an object of the invention to address at least some of the problems and issues outlined above. It is possible to achieve these objects and others by using a set of chair parts, a chair and a method as defined in the attached independent claims.

According to an aspect, a set of chair parts to be assembled into a chair is provided. The set of chair parts comprises a chair seat comprising a plurality of chair frame receiving units and a first type and a second type of chair frame of mutually different cross-sectional sizes, each chair frame comprising a number of longitudinal elements. Each of the plurality of chair frame receiving units has a receiving means in which any of the first or second type of chair frame is to be received, each of the plurality of chair frame receiving units further has snap locking means. The set of chair parts further comprises a first type and a second type of snap-in lids of mutually different sizes, adapted to be in locking engagement with respective of the plurality of snap locking means, thereby locking one of the first type or the second type of chair frame between the plurality of receiving units and a plurality of lids of one of the first or the second type of snap-in lids. Further, the first type of chair frame has a first cross-sectional radius and the second type of chair frame has a second cross-sectional radius different from the first cross-sectional radius, wherein the first type of snap-in lid has a ceiling with a radius of curvature adapted to the first cross-sectional radius and with a height from its bottom to the ceiling also adapted to the first cross-sectional radius, and the second type of snap-in lid has a ceiling with a radius of curvature adapted to the second cross-sectional radius and with a height from its bottom to its ceiling also adapted to the second cross-sectional radius.

Such a set of chair parts makes it possible to couple, or interconnect, a chair seat to a chair frame without using screws or similar fastening arrangements. Further, by adapting the lids to different chair frame sizes in such a way, it is possible to use the same type of chair frame receiving unit for many different sizes of chair frames. This makes it possible to produce only one type of chair seat with the same type of chair frame receiving units for production of chairs that have different chair frame sizes, which makes the production of chairs with different chair frame sizes more cost-efficient.

According to an embodiment, the snap locking means and the snap-in lids are arranged in such a way that when the snap-in lids are moved into locking engagement with its respective snap locking means, the snap-in lids are moved substantially perpendicular to a principal plane of its respective chair frame receiving unit. Since the snapping engagement is achieved by a perpendicular movement towards the chair seat, it is possible to attach chair frames with a relatively short straight part bearing against the chair seat to the chair seat, compared to prior art of EP1284113 and EP2555656 where a sliding movement has to be performed for engagement.

According to an embodiment, the snap locking means comprises two snaps arranged on opposite sides of the receiving means. The snap-in lid further comprises snapping edges for co-operating with respective of the snaps of the snap-locking means. By having one snapping arrangement with snapping edge and snap on each opposite side of the receiving means, the chair frame will be securely held to the chair seat when a chair has been assembled from the set of chair parts.

According to an embodiment, the snap locking means has an elongated extension substantially parallel to an extension of the receiving means of the same receiving unit. Further, each snap-in lid comprises guiding pins for guiding the movement of the snap-in lid into locking engagement with the snap locking means so that when in the locking engagement the guiding pins are arranged at opposite ends of the elongated snap locking means. The guiding means both aids in guiding the snap-in lid into a correct locking engagement with the snap locking means when assembling a chair from the set of chair parts, and also prevents a sliding movement of the snap-in lid in relation to the chair frame receiving unit when in the locking engagement position. The latter is thanks to the position of the guiding pins at opposite ends of the elongated snap locking means.

According to another embodiment, each chair frame receiving unit has a guide pin stop that co-operates with the guiding pins of its respective snap-in lid so that the guiding pins are kept from being deformed. The guide pin stops prevent the guide pins from flexing outwards, in a direction away from the receiving means, whereby the guide pins and in consequence the whole lid is kept from being deformed over time, after a chair has been assembled from the set of chair parts.

According to an embodiment, each snap-in lid comprises a ceiling equipped with a soft material for receiving the chair frame. Thereby, a strong but soft connection is achieved between the chair frame and the lid when the lid is snapped onto the chair frame receiving unit so that a chair frame has been locked between the lid and the receiving unit. The risk for scratches or similar wounds on the chair frame is lowered considerably. Further, tolerances in the chair frame dimensions are taken up very well by the soft material.

According to another embodiment, each chair frame receiving unit and each snap-in lid are made of reinforced rigid plastic, such as polypropylene reinforced with glass fiber.

According to another aspect, a chair is provided assembled from the set of chair parts of the first aspect. The chair comprises the chair seat comprising the plurality of chair frame receiving units, and, either the first type of chair frame and a plurality of the first type of snap-in lids, or the second type of chair frame and a plurality of the second type of snap-in lids.

According to another aspect, a method is provided for assembling a chair comprising a chair seat having a plurality of chair frame receiving units. The chair further comprises a chair frame comprising a number of longitudinal elements, wherein each of the plurality of chair frame receiving units has a receiving means in which a respective of the longitudinal elements of the chair frame is to be positioned and snap locking means for locking engagement with a snap-in lid. The method comprises positioning the longitudinal elements of the chair frame into respective of the receiving means, and moving substantially perpendicular to a principal plane of each chair frame receiving unit, individual of a plurality of snap-in lids into locking engagement with individual of the plurality of receiving units, thereby locking the chair frame between the plurality of receiving units and the plurality of snap-in lids.

Further possible features and benefits of this solution will become apparent from the detailed description below.

### Brief description of drawings

The solution will now be described in more detail by means of exemplary embodiments and with reference to the accompanying drawings, in which:
Fig. 1 is a perspective view of a chair according to an embodiment of the invention.
Fig. 2 is a perspective view of a set of chair parts about to be assembled into a chair, according to an embodiment.
Fig. 3 is a close-up view of one receiving unit and one snap-in lid of fig. 2
Fig. 4 is a perspective side view of a receiving unit according to an embodiment.
Fig. 5 is a perspective view from below of a snap-in lid according to an embodiment.
Fig. 6 is a perspective view of a receiving unit and a snap-in lid in snapping connection, holding a frame in between them, where parts have been taken away to reveal the inside of the connection.
Fig. 7 is a perspective view of three different types of snap-in lids according to an embodiment.
Fig. 8 is a perspective cross-sectional side view of the three different types of snap-in lids and also cross-sections of three different types of chair frames.
Fig. 9 is a flow chart describing a method for assembling a chair according to the invention.

### Detailed description

Briefly described, a solution is provided to facilitate assembling of chairs and to provide chairs that can be easily and quickly assembled and anyhow give a secure and stable coupling between the frame and the seat of the chair. This may be achieved by a chair seat on which a number of frame receiving units are arranged, for example four units. The chair seat comprising the frame receiving units may be produced in one piece, e.g. by plastic molding. The chair further has snap-in lids that have snaps for snapping engagement with snap locking means that are arranged on the receiving units arranged on the chair seat. When assembling the chair the frame is positioned in the frame receiving units and then the snap-in lids are snapped into the snap locking means of the receiving units thereby encapsulating the chair frame between the receiving units and the snap-in lids. The snap-in lids and the snap locking means may be arranged so that for snapping engagement, the snap-in lids are moved substantially perpendicular to a principal plane of the chair frame receiving units, and consequently of the substantially perpendicular of the chair seat.

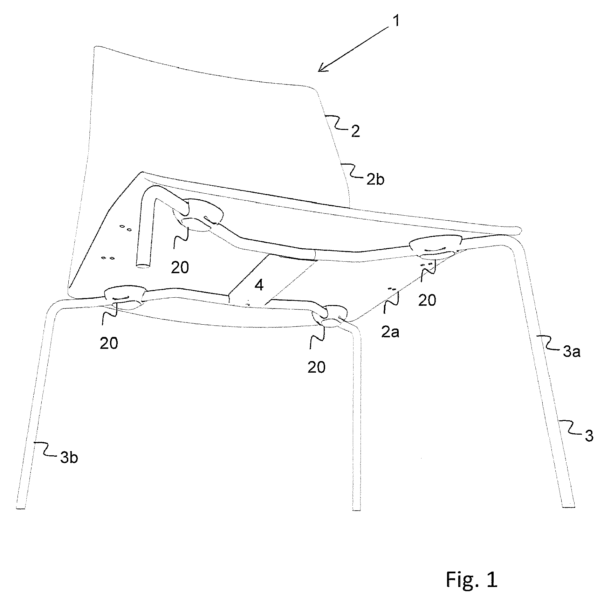

Fig. 1 shows a chair 1 according to an embodiment of the invention. The chair has a chair seat 2. The chair seat 2 has a seating portion 2a and a back portion 2b, however, it is also possible that the chair only has a seating portion and no back portion. The seating portion defines a seat plane. The chair 1 further has a chair frame 3, which comprises a number of longitudinal elements. The number of longitudinal elements may have any cross-sectional shape but is advantageously of a circular cross-sectional shape. The longitudinal elements may be solid or of a tubular shape. The chair frame presents plurality of legs for resting on the ground when the chair is positioned so that it can be sat on. The chair frame may also have one or more, probably two upwards extending longitudinal elements for receiving the back portion. In the embodiment of fig. 1 there are two longitudinal elements 3a and 3b interconnected with a rectangular element 4. However, the chair frame may be made up from any number of longitudinal elements with or without interconnecting elements of any shape.

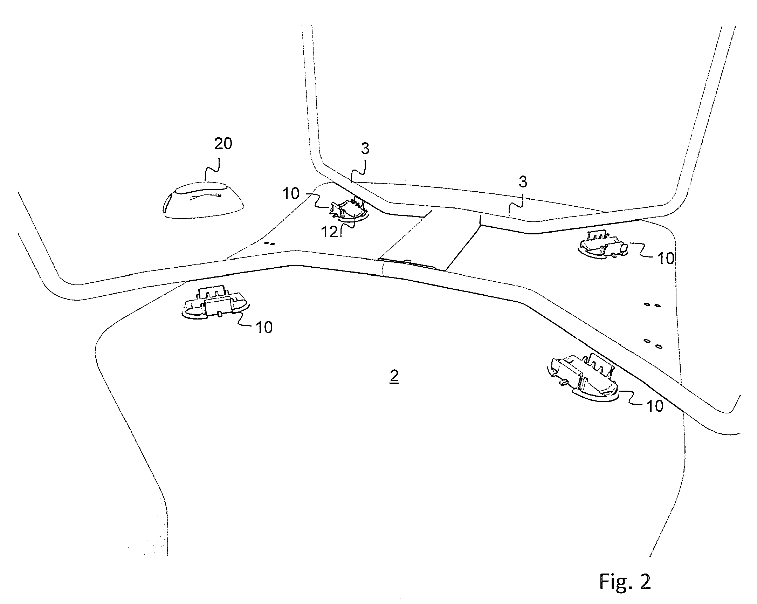

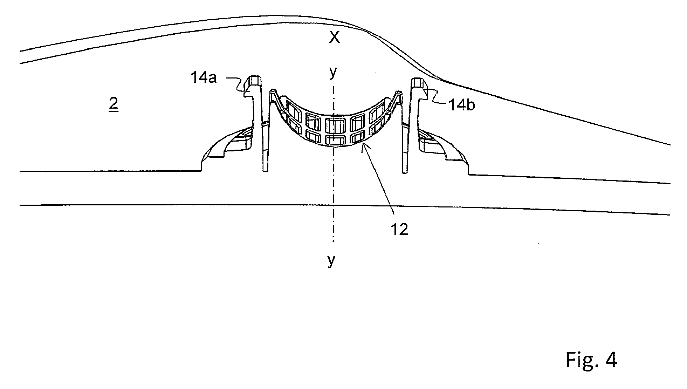

On the chair seat 2 there is fixedly arranged a plurality of chair frame receiving units 10, see fig. 2. The seat and its chair frame receiving units 10 may be produces in one piece, preferably in a plastic molding process. Each chair frame receiving unit 10 has a receiving means 12. The receiving means 12 in this embodiment presents a longitudinally extending recess of a partly circular shaped cross-section. In other words, it presents a cross-section that has a smaller angle than the 180 degrees that a semicircular cross-section presents from a centre X of the imaginary circle, see fig. 4, for example 90-150 degrees. The receiving 12 means has a longitudinal extension substantially parallel to the seat plane.

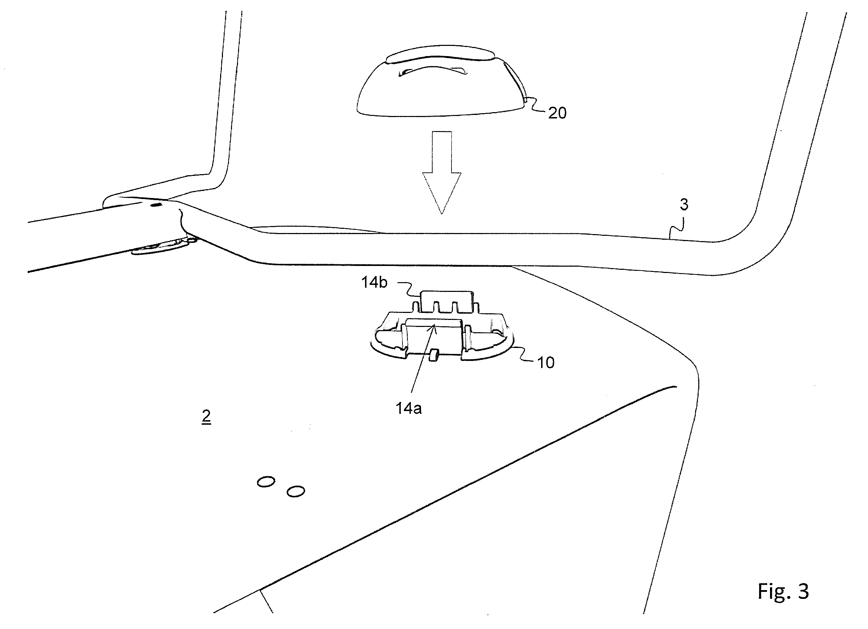

Further, as shown in fig. 2 and in a close-up view in fig. 3, when assembling the chair, the chair frame 3 is positioned in the receiving means 12 of the chair frame receiving units 10. Thereafter, a plurality of snap-in lids 20 are positioned on top of a respective one of the receiving units 10. The snap-in lids are snapped into snap locking means 14a, 14b for snapping engagement with the snap-in lids to its respective receiving unit 10. Then the chair frame is positioned and securely held in place in between the receiving units and its respective snap-in lid. As clearly seen in fig. 3, when assembling the chair this way, a movement substantially perpendicular to the seat plane is performed. In other words, a movement is performed that is substantially perpendicular to a principal plane of each chair frame receiving unit. The principal plane of each chair frame receiving unit is substantially parallel to the chair seat plane in the position where each chair frame receiving unit is fixed to the chair seat.

As seen in fig. 4, which shows the receiving unit 10 from a longitudinal side, the snap locking means 14a, 14b comprises two snaps arranged on opposite sides of the receiving means 12. The snap locking means 14a, 14b each has an elongated extension substantially parallel to an extension of the receiving means 12 (fig 2) in the longitudinal direction y-y.

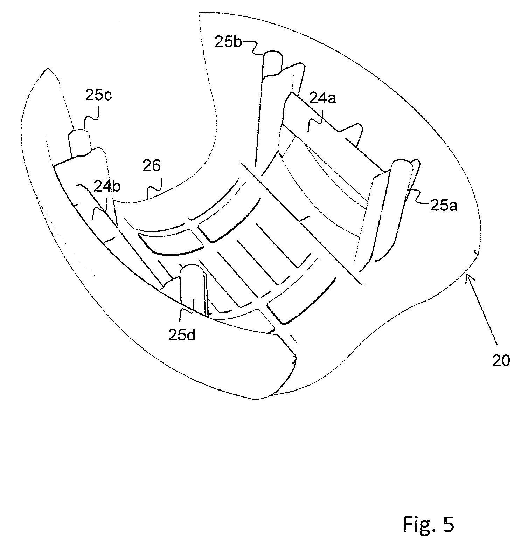

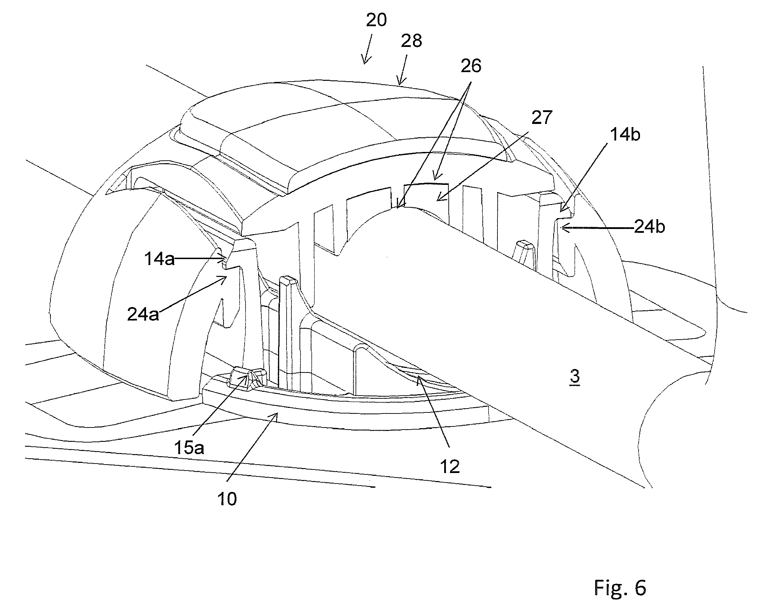

Fig. 5 shows a snap-in lid 20 from below and fig. 6 shows a snap-in lid 20 snapped into a receiving unit 10. The snap-in lid 20 comprises snapping edges 24a, 24b for co-operating with respective of the snaps of the snap-locking means 14a, 14b of the receiving unit 10. Fig. 6 shows how the snapping edges 24a, 24b are snapped over the snaps 14a, 14b when the snap-in lid is engaged with the receiving unit, holding a longitudinal element of the frame 3 in between them. Each snap-in lid 20 further comprises guiding pins 25a-d for guiding the movement of the snap-in lid into locking engagement with the snap locking means 14a, 14b so that when in the locking engagement the guiding pins are arranged at opposite ends of the elongated snap locking means, in their longitudinal extension direction, i.e. in the longitudinal extension direction of the receiving means 12 y-y. The guiding pins have an elongated shape and extend substantially perpendicular to the elongated extension of the snap locking means. Each snap-in lid 20 further comprises a ceiling 26 equipped with a soft material 27 for receiving the chair frame. The soft material may be a thermoplastic elastomer, TPE. As shown in fig. 6, the soft material may be inserted between harder protrusions from the rest of the material of the lid. Material. In addition, or as an alternative, the roof 28 of the snap-in lid may be equipped with a similar soft material, thereby providing a stacking protection when stacking or piling chairs equipped with such an arrangement on top of each other.

Further, each chair frame receiving unit 10 has a guide pin stop 15a-d (fig. 6) that co-operates with the guiding pins 25a-d of its respective snap-in lid so that the guiding pins are kept from being deformed. The guide pin stop 15a-15d may be a ridge extending upwards from the chair seat. Thanks to this guide pin stop and to the receiving means 12 the guide pins are kept in position, not flexing in any direction.

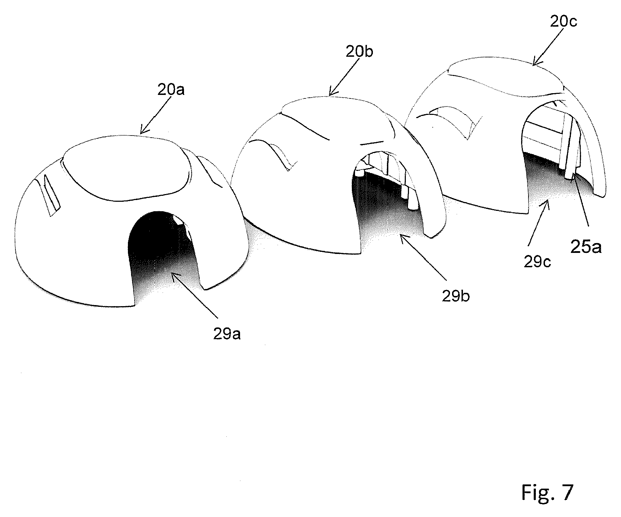

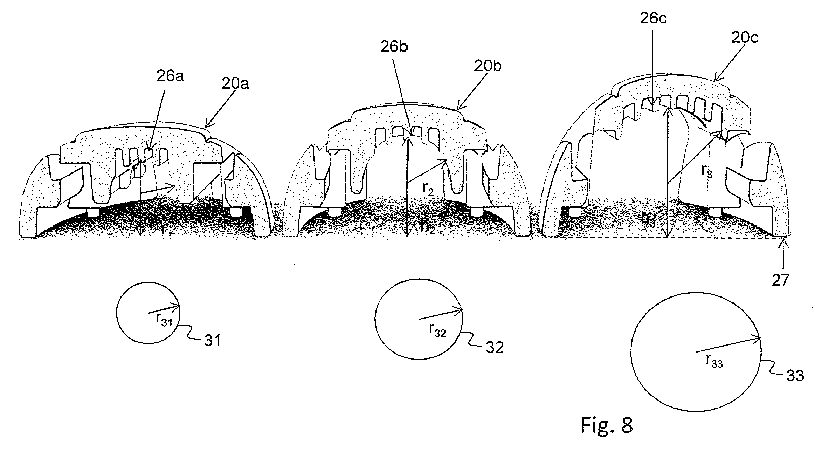

Figures 7 and 8 show three different types of snap-in lids adapted to different sizes of chair frame longitudinal elements: a first type 20a, a second type 20b and a third type 20c. The snap-in lids have different sizes of openings 29a, 29b, 29c each opening adapted to a size or a size span of a chair frame cross-section. By adapting a radius of curvature of ceilings 26a, 26b, 26c of the respective type of snap-in lid and of a height from bottom to ceiling of the respective type of snap-in lid to the cross-sectional size of a respective type of chair frame, it is possible to use the same type of chair frame receiving unit 10 for many different sizes of chair frame. As a result larger series of chair seats with chair frame receiving units can be made compared to if different types of receiving units had to be used. In order to function with one and the same receiving unit, the three types of snap-in lids have the same distance between the snapping edges 24a, 24b.

In more detail for the example of fig. 8, the first type of snap-in lid 20a is adapted to a first type of chair frame 31 with a first cross-sectional radius r₃₁. For this reason, the first type of snap-in lid 20a has a ceiling 26a with a radius of curvature r₁ adapted to the first cross-sectional radius r₃₁ and with a height h₁ from bottom 27 to ceiling also adapted to the first cross-sectional radius r₃₁. Further, the second type of snap-in lid 20b is adapted to a second type of chair frame 32 with a second cross-sectional radius r₃₂ greater than the first radius. For this reason, the second type of snap-in lid 20b has a ceiling 26b with a radius of curvature r₂ adapted to the second cross-sectional radius r₃₂ and with a height h₂ from bottom 27 to ceiling also adapted to the second cross-sectional radius r₃₂. In a similar way, the third type of snap-in lid 20c is adapted to a third type of chair frame 33 with a third cross-sectional radius r₃₃ greater than both the first and the second radius. For this reason, the third type of snap-in lid 20c has a ceiling 26c with a radius of curvature r₃ adapted to the third cross-sectional radius r₃₃ and with a height h₃ from bottom 27 to ceiling also adapted to the first cross-sectional radius r₃₁. The bottom 27 of the snap-in lids is the part of the snap-in lid that is to bear against the principal plane of the chair frame receiving unit 10, when the lid is snapped into engagement with the snap locking means of the chair frame receiving unit. The bottom is marked with a dotted line in the third type 20c of snap-in lid of fig. 8. The ceiling of the snap-in lids is the inner side of the lid, at a portion of the inner side of the lid opposite the bottom of the lid. The embodiment above has been shown with three different sizes of snap-in lids, a person skilled in the art understands however that there might as well be only two different sizes or more than three different sizes.

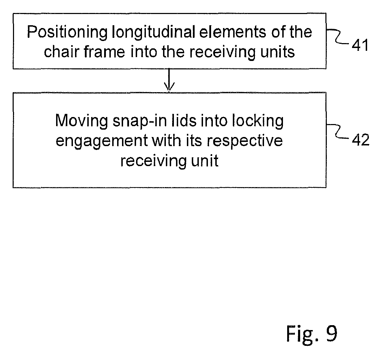

According to another embodiment, shown in fig. 9, a method is provided for assembling a chair according to any of the embodiments described above. The method comprises positioning 41 the number of longitudinal elements of the chair frame 3 into respective of the receiving means 12, and moving 42 substantially perpendicular to the principal plane of each chair frame receiving unit, individual of the plurality of snap-in lids 20 into locking engagement with individual of the plurality of receiving units 10, thereby locking the chair frame 3 between the plurality of receiving units 10 and the plurality of snap-in lids 20.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby.

## Claims

1. Set of chair parts to be assembled into a chair (1) comprising:
a chair seat (2) comprising a plurality of chair frame receiving units (10);
a first type (31) and a second type (32) of chair frame (3) of mutually different cross-sectional sizes, each chair frame comprising a number of longitudinal elements,
wherein each of the plurality of chair frame receiving units (10) has a receiving means (12) in which any of the first or second type of chair frame (31, 32) is to be received, each of the plurality of chair frame receiving units (10) further has snap locking means (14a,14b), and
a first type (20a) and a second type (20b) of snap-in lids (20) of mutually different sizes, adapted to be in locking engagement with respective of the plurality of snap locking means (14a, 14b) thereby locking one of the first type or the second type of chair frame (31, 32) between the plurality of receiving units (10) and a plurality of lids of one of the first or the second type of snap-in lids (20a, 20b), and wherein the first type (31) of chair frame has a first cross-sectional radius (r₃₁) and the second type (32) of chair frame has a second cross-sectional radius (r₃₂) different from the first cross-sectional radius, and wherein the first type of snap-in lid (20a) has a ceiling (26a) with a radius of curvature (r₁) adapted to the first cross-sectional radius (r₃₁) and with a height (h₁) from its bottom (27) to the ceiling also adapted to the first cross-sectional radius (r₃₁), and the second type of snap-in lid (20b) has a ceiling (26b) with a radius of curvature (r₂) adapted to the second cross-sectional radius (r₃₂) and with a height (h₂) from its bottom (27) to its ceiling also adapted to the second cross-sectional radius (r₃₂).

2. Set of chair parts according to claim 1, wherein the snap locking means (14a, 14b) and the snap-in lids (20a, 20b) are arranged in such a way that when the snap-in lids (20a, 20b) are moved into locking engagement with its respective snap locking means, the snap-in lids are moved substantially perpendicular to a principal plane of its respective chair frame receiving unit (10).

3. Set of chair parts according to claim 1 or 2, wherein the snap locking means (14a, 14b) comprises two snaps arranged on opposite sides of the receiving means (12), and each snap-in lid (20) comprises snapping edges (24a, 24b) for co-operating with respective of the snaps of the snap-locking means.

4. Set of chair parts according to any of claims 1-3, wherein the snap locking means (14a, 14b) has an elongated extension substantially parallel to an extension of the receiving means (12) of the same receiving unit, and wherein each snap-in lid (20) further comprises guiding pins (25a-d) for guiding the movement of the snap-in lid (20) into locking engagement with the snap locking means (14a, 14b) so that when in the locking engagement the guiding pins (25a-d) are arranged at opposite ends of the elongated snap locking means (14a, 14b).

5. Set of chair parts according to claim 4, wherein each chair frame receiving unit (10) has a guide pin stop (15a-d) that co-operates with the guiding pins (25a-d) of its respective snap-in lid (20) so that the guiding pins (25a-d) are kept from being deformed.

6. Set of chair parts according to any of claims 1-5, wherein each snap-in lid (20) comprises a ceiling (26) equipped with a thermoplastic elastomer (27) for receiving the first (31) or the second (32) type of chair frame, respectively.

7. Set of chair parts according to any of claims 1-6, wherein each chair frame receiving unit (10) and each snap-in lid (20) are made of reinforced rigid plastic, such as polypropylene reinforced with glass fibre.

8. A chair (1) assembled from the set of chair parts according to any of claims 1-7, comprising:
the chair seat (2) comprising the plurality of chair frame receiving units (10), and, either the first type (31) of chair frame (3) and a plurality of the first type (20a) of snap-in lids (20), or the second type (32) of chair frame (3) and a plurality of the second type (20b) of snap-in lids (20).

9. Method for assembling a chair from a set of chair parts according to any of claims 1-7, the method comprising:
positioning (41) the longitudinal elements (3a) of the first type (31) or the second type (32) of the chair frame (3) into respective of the receiving means (12), and
moving (42) substantially perpendicular to a principal plane of each chair frame receiving unit, individual of the plurality of the first type or the second type of snap-in lids (20) into locking engagement with individual of the plurality of receiving units (10), thereby locking the first type (31) of chair frame (3) between the plurality of receiving units (10) and the plurality of first type (20a) of snap-in lids (20), or locking the second type (32) of chair frame (3) between the plurality of receiving units (10) and the plurality of second type (20b) of snap-in lids (20).
